Europäisches Patentamt

European Patent Office

Office européen des brevets

(19)

(11) EP 0 814 339 A1

(12) DEMANDE DE BREVET EUROPEEN

(43) Date de publication:
29.12.1997 Bulletin 1997/52

(51) Int Cl.⁶: G01P 5/00

(21) Numéro de dépôt: 97401346.8

(22) Date de dépôt: 13.06.1997

(84) Etats contractants désignés:
AT BE CH DE DK ES FI FR GB GR IE IT LI LU MC
NL PT SE

(30) Priorité: 18.06.1996 FR 9607535

(71) Demandeur: SEXTANT AVIONIQUE
78141 Velizy Villacoublay (FR)

(72) Inventeurs:
• Galtier, Frédéric
  94117 Arcueil Cedex (FR)

• Besson, Olivier
  94117 Arcueil Cedex (FR)

(74) Mandataire: Guérin, Michel et al
THOMSON-CSF-S.C.P.I.,
13, Avenue du Président
Salvador Allende
94117 Arcueil Cédex (FR)

(54) Sonde vélocimétrique optique

(57) L'invention concerne une sonde vélocimétrique optique comprenant des moyens pour éclairer un volume de mesure dans lequel peuvent passer des particules, et des moyens de détection optique pour produire un signal électrique x(t) en réponse au passage d'une particule dans le volume éclairé.

Elle comprend également des moyens pour extraire des informations représentatives de la vitesse v de particules à partir du signal électrique, ces moyens comportant notamment :

- des moyens pour calculer la densité de probabilité $p(x,\theta)$ du vecteur signal x(t),
- des moyens pour déterminer une fréquence représentative de la vitesse v pour laquelle cette probabilité est maximale.

Application : avionique

FIG.1

EP 0 814 339 A1

**Description**

Le domaine de l'invention est celui des sondes vélocimétriques optiques permettant de définir la vitesse de particules en mouvement relatif par rapport à la sonde.

Il existe à l'heure actuelle des dispositifs optiques comprenant deux faisceaux lasers qui interfèrent de manière à générer un volume de mesure ellipsoïdal, consistant en des franges équidistantes sombres et lumineuses. Lorsqu'une particule en mouvement traverse ce volume de mesure, le signal recueilli par un photodétecteur comprend des indications relatives à la vitesse de cette particule par rapport à la sonde optique. Il est donc possible en analysant le signal recueilli de définir la vitesse d'une particule considérée.

Ce type de sonde peut être utilisé pour définir la vitesse de toute particule suffisamment petite devant les franges d'interférences créées et notamment pour définir la vitesse d'un aéronef, connaissant la vitesse relative de particules dans l'air par rapport audit aéronef équipé de ce type de sonde vélocimétrique.

En effet, en raison de progrès réalisés en matière de miniaturisation et de coût au niveau des sources laser et notamment des diodes laser, il devient possible de réaliser de telles sondes vélocimétriques optiques, embarquées à bord de l'aéronef dont on cherche à mesurer la vitesse.

Les performances de ce type de sonde sont directement dépendantes des moyens d'analyse du signal recueilli par un photodétecteur, pour en extraire le paramètre vitesse. C'est pourquoi l'invention a pour objet une sonde vélocimétrique optique du type de celle décrite précédemment et comprenant des moyens de détermination de vitesse très performants.

Plus précisément l'invention a pour objet une sonde vélocimétrique optique, comprenant des moyens pour éclairer un volume de mesure dans lequel peuvent passer des particules en mouvement relatif par rapport à la sonde, et des moyens de détection optique pour produire un signal électrique en réponse au passage d'une particule dans le volume de mesure éclairé, le spectre en fréquence de ce signal a une largeur $\Delta F$ centrée sur une fréquence dominante Fo représentative de la vitesse relative de la particule par rapport à la sonde, on a : $Fo = \frac{v}{i}$, i étant l'interfrange. Cette sonde comporte des moyens numériques pour établir un vecteur x(t) représentant N échantillons numériques du signal électrique détecté et étant caractérisée en ce qu'elle comporte en outre :

- des moyens pour calculer la densité de probabilité $p(x,\theta)$ du vecteur signal x, constitué des échantillons de signal $\{x(t)\}_{t=0,\pm1,...\pm D}$, en fonction d'un vecteur paramètre $\theta=[A,f_d,\sigma^2]$ caractérisant complètement x;

    - des moyens pour déterminer la fréquence $f_o$ pour laquelle la probabilité est maximale ;
    - des moyens pour fournir une indication de vitesse v d'une particule par rapport à la sonde, à partir de la fréquence $f_o$.

Le vecteur signal $x = \{x(t)\}_{t=0,\pm1,...\pm D}$ est défini par

$$x(t) = A.e^{-2\alpha^2 f^2 t^2} \cos(2\pi ft)+\omega(t)$$

où    $\alpha$ est un coefficient fixe,
t est le temps,
$\omega(t)$ est un bruit gaussien d'énergie $\sigma^2$.

Le vecteur $\theta$ est quant à lui défini comme $\theta = [A, f_d, \sigma^2]$

Les moyens utilisés dans l'invention pour déterminer la fréquence f permettent d'atteindre une précision sur ladite fréquence supérieure à celle obtenue par une méthode classique de calcul utilisant la transformée de Fourier. En effet, le signal recueilli au niveau de la photodiode étant d'une durée déterminée, le spectre en fréquence obtenu par ce moyen d'analyse présente une certaine largeur spectrale en fréquence entraînant une imprécision sur la détermination de ladite fréquence.

L'invention sera mieux comprise et d'autres avantages apparaîtront à la lecture de la description qui va suivre donnée à titre non limitatif et grâce aux figures annexées parmi lesquelles :

- la figure 1 illustre un exemple de sonde vélocimétrique selon l'invention ;
- la figure 2 représente le volume de mesure dans lequel passe les particules dont on veut détecter la vitesse relative.

De manière générale, la sonde vélocimétrique optique de l'invention comprend deux faisceaux optiques interférant dans un volume de mesure.

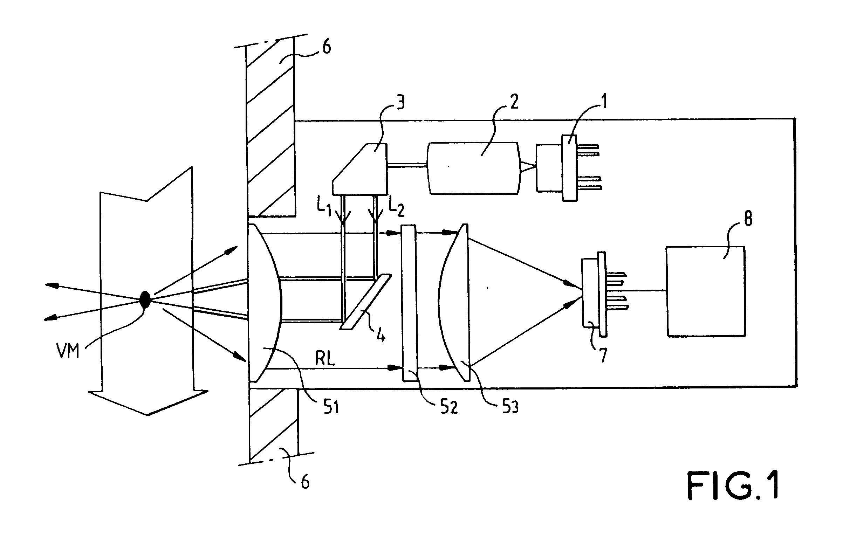

La figure 1 illustre un exemple de réalisation de sonde vélocimétrique montée à bord d'un aéronef, comprenant une source laser 1, pouvant être de type diode laser, en sortie de laquelle on dispose un collimateur 2, un diviseur de faisceau optique 3 créant deux faisceaux optiques L1 et L2 parallèles, dirigés au moyen d'un système de renvoi 4, vers une optique 51 en sortie de l'aéronef matérialisée par la peau de l'aéronef 6. L'optique 51 a pour fonction de faire converger les faisceaux lumineux L1 et L2, dans un volume dit volume de mesure MV, extérieur compris dans l'atmosphère dans laquelle circulent des particules constitutives d'aérosols atmosphériques. Ces aérosols renvoient de la lumière rétrodiffusée selon un faisceau lumineux RL, détecté par le photodétecteur 7, pouvant typiquement être une phototiode, via des optiques 51, 52, 53.

En sortie de la photodiode, la sonde vélocimétrique comprend des moyens de traitement du signal 8 comprenant des moyens de conversion du signal analogique en signal numérique, des moyens d'extraction d'informations de fréquence et des moyens de calcul de la vitesse relative des particules par rapport à l'aéronef.

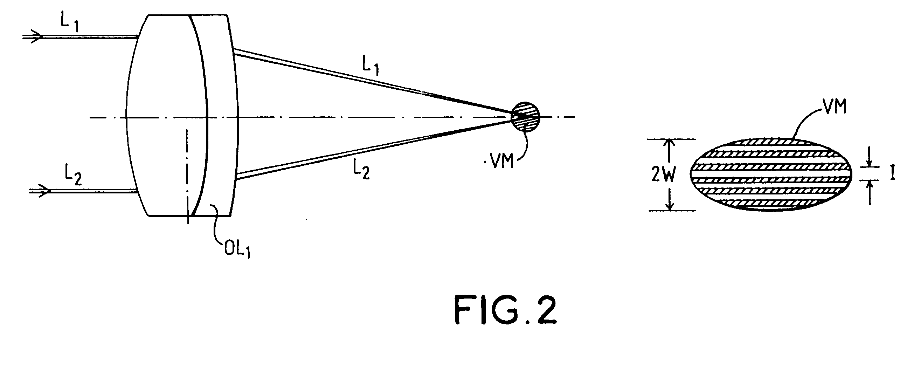

La figure 2 schématise le volume de mesure VM, constitué par les franges d'interférence des deux faisceaux optiques L1 et L2. La largeur 2W représente la largeur totale de ce volume, I étant la largeur d'interfrange.

La sonde selon l'invention comprend les moyens 8 de traitement du signal recueilli au niveau du photodétecteur 7, permettant de déterminer avec une grande précision la vitesse d'une particule traversant le volume de mesure VM.

Nous allons décrire les moyens 8 en rappelant tout d'abord les considérations suivantes :

Lorsqu'une particule ayant une vitesse relative v par rapport au volume de mesure VM, pénètre dans ce réseau d'interfranges, la lumière rétrodiffusée par cette particule et recueillie par le photodétecteur 5 fournit un signal i(t) dont le modèle mathématique est connu :

$$i(t) = A.s(t) = A.e^{-2(v/w)^2 t^2} \cos(2\pi v/l.t) + \omega(t)$$

avec $t = 0, \pm 1, \ldots \pm w/v$

où

- l'amplitude A dépend de la taille de la particule, de la puissance lumineuse incidente et du coefficient de transmission de la partie réceptrice ;
- v représente la vitesse de la particule ;
- 2w la largeur totale des franges d'interférences définissant le volume de mesure comme l'illustre la figure 2 ;
- l la largeur d'interfrange ;
- $\omega(t)$ bruit blanc supposé gaussien d'énergie $\sigma^2$.

avec $\alpha = l/w$ et $f_d = v/l$

on obtient

$$i(t) = A.s(t) + \omega(t) = A.e^{-2\alpha^2 f d^2 t^2} \cos(2\pi f_d t) + \omega(t)$$

- la sonde selon l'invention comprend des moyens pour prélever N échantillons du signal, à des instants t = -D, ..., 0, ..., +D, l'ensemble de ces échantillons permet de définir le vecteur x tel que : x = A.s + $\omega$ ;
- elle comprend également des moyens pour définir un estimateur du maximum de vraisemblance, permettant d'obtenir une estimée $f_o$ de $f_d$ qui rende les plus vraisemblables possibles les mesures effectuées sur le signal et les valeurs obtenues à partir du modèle théorique pour la fréquence $f_o$ ;
- pour définir cette fonction de probabilité on peut déterminer un vecteur $\theta$ (relatif au modèle mathématique) dépendant des paramètres (A, f, $\omega$). Le bruit $\omega(t)$ peut être estimé égal à une valeur moyenne $\sigma^2$. $\theta$ ne dépend alors que des paramètres (A, f). La fonction de densité de probabilité p(x,$\theta$) peut alors être définie comme suit. Le vecteur s contient les données théoriques correspondant à $\theta$ alors que x contient les données mesurées.

$$p(x,\theta) = \frac{1}{(2\pi\sigma^2)^{(2D+1)/2}} . \exp\left\{\frac{-1}{2\sigma^2}\|x - As\|^2\right\} (1)$$

chercher à maximiser la fonction p(x,$\theta$) est équivalent à chercher à maximiser le logarithme de p(x,$\theta$) soit la fonction $\Lambda(x,\theta)$ avec :

$$\Lambda(x,\theta) = -\left(\frac{2D+1}{2}\right)\log 2\pi - \left(\frac{2D+1}{2}\right)\log \sigma^2 - \frac{1}{2\sigma^2}\|x - As\|^2 \quad (2)$$

En définissant une estimée $\hat{A}$ du paramètre $A$ avec

$$\hat{A} = \frac{s^T.x}{s^T.s}$$

$s^T$ étant la transposée de $s$.
L'équation (2) devient l'équation suivante (3) :

$$\Lambda(x,\theta) = -\left(\frac{2D+1}{2}\right)\log 2\pi - \left(\frac{2D+1}{2}\right)\log \sigma^2 - \frac{1}{2\sigma^2}\left\|x - \frac{s^T.x}{s^T.s}.s\right\|^2 \quad (3)$$

On est donc ramené à rechercher le minimum de la fonction

$$J(f) = \left\|x - \frac{s^T.x}{s^T.s}.s\right\|^2$$

avec
$\quad x = [x(-D),..., x(o), ..., x(D)]^T$
$\quad s = [s(-D),..., s(o), ..., s(D)]^T$
et
$\quad s(t) = e^{-2\alpha 2.f2.t2}.\cos(2\pi ft)$

Comme la fonction $J(f)$ est une fonction non linéaire de $f$, il n'existe pas de solution analytique pour déterminer la valeur $f_o$ pour laquelle cette fonction $J(f)$ est minimale, c'est-à-dire possédant une dérivée première nulle $J'(f)$ et une dérivée seconde positive $J''(f)$.

Une solution proposée dans le cadre de la sonde selon l'invention est de procéder de manière itérative à partir d'une première valeur $f_{o1}$ définie, par transformée de Fourier du signal recueilli au niveau du photodétecteur.

Plusieurs types d'itérations peuvent être utilisés pour converger vers la valeur estimée $f_o$ recherchée.

On peut notamment utiliser un algorithme de type Gauss-Newton dans lequel l'incrément de fréquence estimée est déterminée par l'équation (4) suivante :

$$f^{(n+1)} = f^{(n)} - \left[\frac{1}{J''}J'\right]_{f^{(n)}} \qquad J'(f) = \frac{dJ(f)}{df} \text{ et } J''(f) = \frac{d^2J(f)}{d^2f} \qquad (4)$$

On détermine une valeur estimée $f_o = f^{(n)}$ lorsque la différence $f^{(n+1)} - f^{(n)}$ est inférieure à un seuil prédéfini en considérant

$$\varepsilon = x - \frac{s^T.x}{s^T.s}.s$$

on peut noter $J(f) = \|\varepsilon\|^2$
et l'on a $J'(f) = 2\varepsilon'^T.\varepsilon \qquad$ si $\varepsilon' = \frac{d\varepsilon(f)}{df}$
la procédure de Gauss Newton repose également sur l'approximation suivante donnée par l'équation (5) :

$$J''(f) = 2\varepsilon''^{T}.\varepsilon + 2\varepsilon'^{T}.\varepsilon' \simeq 2\,\varepsilon'^{T}\,\varepsilon' \tag{5}$$

on peut montrer que :

$$\varepsilon' = -\frac{[(x^{T}.s'f)(s^{T}.s) - 2(x^{T}.s)(s^{T}.s'f)]s + (x^{T}.s)(s^{T}.s)s'f}{(s^{T}.s)^{2}}$$

avec $s'f = \frac{ds(f)}{df}$

Dans l'estimateur de vraisemblance utilisé dans les moyens de traitement du signal de la sonde vélocimétrique, on peut avantageusement approximer les différents produits scalaires

$$s^{T}.s \simeq \frac{\sqrt{\pi}}{4\alpha.f}$$

$$s^{T}.s'f \simeq -\frac{\sqrt{\pi}}{8\alpha.f^{2}}$$

$$s'^{T}_{f}.s'_{f} \simeq \frac{\sqrt{\pi}\left(3\alpha^{2} + 2\pi^{2}\right)}{16\alpha^{3}f^{3}}$$

En assimilant les sommes discrètes sur 2T+1 points à des sommes discrètes infinies, puis en assimilant, de même, ces sommes discrètes infinies à des intégrales continues de $+\infty$ à $-\infty$.

En reportant dans les dérivées premières et secondes, on obtient les expressions suivantes :

$$J'(f) \simeq \frac{4\alpha}{\sqrt{\pi}}\left\{2f(x^{T}.s'f) + (x^{T}.s)\right\}(x^{T}.s)$$

$$J''(f) = \frac{2}{\sqrt{\pi}.\alpha f}\left\{\alpha^{2}\left[2f(x^{T}.s'f) + (x^{T}.s)\right]^{2} + 2(\alpha^{2} + \pi^{2})(x^{T}.s)\right\}$$

La formule d'iteration sur la fréquence devenant :

$$f^{(n+1)} = f^{(n)} - \left[(-2\alpha^{2}f).\frac{\left\{2f.(x^{T}.s'f) + (x^{T}.s)\right\}(x^{T}.s)}{\left\{\alpha^{2}\left[2f.(x^{T}.s'f) + (x^{T}.s)\right]^{2} + 2(\alpha^{2} + \pi^{2})(x^{T}.s)^{2}\right\}}\right]_{f^{(n)}}$$

Chaque iteration nécessite ainsi le calcul de $x^{T}.s$ et $x^{T}.s'f$, soit $2(2D+1)$ multiplications et additions plus environ 7 multiplications et 2 additions sur des scalaires.

L'algorithme utilisé comprend ainsi les trois phases :

- initialisation de l'algorithme avec $f_{01} = f_{FFT}$ ($f_{FFT}$ : fréquence obtenue par la transformée de Fourier)
- actualisation de la fréquence estimée par la formule d'iteration
- l'arrêt du calcul est fixé par la validation d'un critère de précision sur l'estimation. Ce critère dépend de la valeur d'un paramètre $\delta$ défini de la manière suivante :

$$\left| f^{(n+1)} - f^{(n)} \right| \le \delta f^{(n)}$$

Avec le type d'estimateur utilisé dans la présente invention, il est non seulement possible de calculer l'estimée de la fréquence recherchée, mais il est aussi possible de calculer une estimation au degré de confiance que l'on peut avoir dans l'estimation de la fréquence.

De manière générale, pour tout estimateur que l'on peut construire sur le signal, il existe une mesure de l'efficacité - en terme de précision des résultats qu'il fournit - de cet estimateur, constituée par les bornes de Rao-Cramer (correspondant à des bornes associées à un modèle de bruit, ici supposé bruit blanc gaussien).

Les bornes de Rao-Cramer (usuellement notées CRB) constituent en termes de variance, la performance ultime de tout estimateur que l'on pourrait construire sur le signal. C'est-à-dire qu'elles donnent la limite inférieure de la variance des paramètres estimés du signal par rapport à son modèle théorique.

La méthode d'estimation proposée dans l'invention appelée Estimateur du Maximum de vraisemblance est en terme de précision de mesures, le meilleur estimateur possible, atteignant les bornes de Rao-Cramer.

Ainsi on peut considérer que dans 99 % des cas, la mesure effectuée sur f est comprise dans l'intervalle :

$$\left[ f_0 - 2\sqrt{CRB(f_0)} \; ; f_0 + 2\sqrt{CRB(f_0)} \right]$$

Le calcul de la borne $CRB(f_o)$ est effectué de la manière suivante :

A partir de l'équation de probabilité (2) on définit la matrice FIM (Fisher Information Matrix) dont les éléments sont donnés par l'équation :

$$F_{ij} = -E\left\{ \frac{\partial^2 \Lambda(x,\theta)}{\partial \theta_i \partial \theta_j} \right\}$$

avec $\theta_i$ est la $i^{ème}$ composante du vecteur $\theta$

et les bornes $CRB(\theta)$ sont définies par l'équation $CRB(\theta) = F^{-1}$

on peut notamment montrer que $CRB(f_o)$ répond à l'approximation suivante :

$$CRB(f_o) \approx \frac{\sigma^2}{A^2} \frac{8\alpha^3 f_d^3}{\sqrt{\pi}\left(\alpha^2 + \pi^2\right)}$$

**Revendications**

1. Sonde vélocimétrique optique, comprenant des moyens pour éclairer un volume de mesure dans lequel peuvent passer des particules en mouvement relatif par rapport à la sonde, et des moyens de détection optique pour produire un signal électrique en réponse au passage d'une particule dans le volume de mesure éclairé, représentative de la vitesse relative de la particule par rapport à la sonde, cette sonde comportant des moyens numériques pour établir un vecteur x(t) représentant N échantillons numériques du signal électrique détécté et étant caractérisée en ce qu'elle comporte en outre :

   - des moyens pour calculer la densité de probabilité $p(x,\theta)$ du vecteur signal x, constitué des échantillons de signal $\{x(t)\}_{t=0,\pm1,\dots\pm D}$, en fonction d'un vecteur paramètre $\theta=[A,f_d,\sigma^2]$ caractérisant complètement x ;
   - des moyens pour déterminer la fréquence $f_o$ pour laquelle la probabilité est maximale ;
   - des moyens pour fournir une indication de vitesse v d'une particule par rapport à la sonde, à partir de la fréquence $f_o$.

2. Sonde vélocimétrique optique selon la revendication 1, caractérisée en ce que le vecteur signal $x = \{x(t)\}_{t=0,\pm1,\dots\pm D}$ est défini par

$$x(t) = A.e^{-2\alpha^2 f^2 t^2} \cos(2\pi ft) + \omega(t)$$

où $\alpha$ est un coefficient fixe,

t est le temps,

$\omega$(t) est un bruit gaussien d'énergie $\sigma^2$.

3. Sonde vélocimétrique optique selon l'une des revendications 1 ou 2, caractérisée par l'expression suivante de la densité de probabilité des données mesurées en fonction du vecteur paramètre $\theta$ :

$$\log P(x,\theta) = (2D+1)/2 \cdot \log 2\pi - (2D+1)/2 \cdot \log\sigma^2 - 1/2\sigma^2\|x\text{-}A.s\|$$

où $s(t) = e^{-2\alpha 2f2t2} \cos(2\pi ft)$

et où -D, ..., 0, ..., +D correspondent aux instants où sont prélevés les N échantillons.

4. Sonde vélocimétrique optique selon l'une des revendications 1 à 3, caractérisée en ce que l'amplitude A est estimée à la valeur Â dont la valeur est donnée par la formule suivante :

$$\hat{A} = s^T.x/s^T.s$$

où $s^T$ est la transposée du vecteur s.

5. Sonde vélocimétrique optique selon la revendication 4, caractérisée en ce que les valeurs f possibles pour calculer la probabilité $P(x,\theta)$ sont une succession de valeur $f_n$ où n est un indice et la valeur $f^{(n+1)}$ se déduit de la valeur $f^{(n)}$ selon une itération de type Gauss-Newton.

6. Sonde vélocimétrique optique selon la revendication 5, caractérisée en ce que

$$f^{(n+1)} = f^{(n)} - \left[\frac{J'}{J''}\right]_{f^{(n)}}$$

avec J' et J" les fonctions dérivées première et seconde de la fonction $J_1(f)$ définie par $J(f) = \|\epsilon\|^2$ avec $\epsilon = x - \frac{s^T.x}{s^T.s}.s$

7. Sonde vélocimétrique selon la revendication 6, caractérisée en ce que J'(f) est calculé par le produit scalaire $2\epsilon'^T.\epsilon$, $\epsilon'^T$ est le valeur transposé de $\epsilon'$.

8. Sonde vélocimétrique selon la revendication 7, caractérisée en ce que la dérivée seconde J"(f) est calculée par le produit scalaire $2\epsilon'^T.\epsilon$.

9. Sonde vélocimétrique selon l'une des revendications 7 ou 8, caractérisée en ce que les produits scalaires $s^T.s$, $s^T.s'f$, $s'f^T.s'f$ sont approximées par les valeurs suivantes :

$$s^T.s \simeq \frac{\sqrt{\pi}}{4\alpha.f} \ , \ s^T.s'f \simeq \frac{-\sqrt{\pi}}{8\alpha f^2} \ , \ s'f^T.s'f \simeq \frac{\sqrt{\pi}\left(3\alpha^2 + 2\pi^2\right)}{16.\alpha^3 f^3}$$

FIG.1

FIG.2

Office européen
des brevets

**RAPPORT DE RECHERCHE EUROPEENNE**

Numero de la demande

EP 97 40 1346

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | US 4 786 168 A (J. F. MEYERS ET AL) <br> * colonne 1, ligne 18 - ligne 48; figure 1 * <br> * colonne 3, ligne 47 - ligne 63 * <br> --- | 1 | G01P5/00 |
| Y | US 5 313 263 A (J. B. ABBISS ET AL) <br> * colonne 6, ligne 35 - colonne 7, ligne 18; figures 2,3 * <br> --- | 1 | |
| Y | PROCEEDINGS OF THE ANNUAL CONFERENCE OF THE ENGINEERING IN MEDICINE AND BIOLOGY SOCIETY, PHILADELPHIA, NOV. 1 - 4, 1990, vol. 12: 1990, 1 Novembre 1990, PEDERSEN P C;BANU ONARAL, pages 1410-1412, XP000244801 YUTAKA FUKUOKA: "APPLICATION OF LEARNING SIGNAL PROCESSING SYSTEM ON RBC VELOCITY MEASUREMENT USING LASER DOPPLER TECHNIQUE" <br> * page 1410, colonne de gauche - colonne de droite, alinéa 2 * <br> --- | 1 | |
| A | EP 0 638 869 A (SIEMENS) <br> * le document en entier * <br> --- | 1 | DOMAINES TECHNIQUES RECHERCHES (Int.Cl.6) <br> G01P <br> G01S |
| A | US 4 984 188 A (HARUO KATO) <br> * abrégé; figure 1 * <br> * colonne 4, ligne 61 - colonne 5, ligne 16 * <br> ----- | | G01F <br> G01R <br> G06F |

Le présent rapport a été établi pour toutes les revendications

| Lieu de la recherche | Date d'achèvement de la recherche | Examinateur |
|---|---|---|
| BERLIN | 23 Septembre 1997 | Breusing, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)